# EUROPEAN PATENT APPLICATION

(11) **EP 2 244 226 A1**
(43) Date of publication of application: **27.10.2010**
(21) Application number: 10158855.6
(22) Date of filing: 31.03.2010
(51) Int. Cl.: G06T 5/00, G06T 5/20

(54) **Image processing apparatus and image processing method**

(30) Priority: 24.04.2009 JP 2009106194
(71) Applicant: Renesas Electronics Corporation, Kanagawa (JP)
(72) Inventor: Fuji, Kazuhiro, Kawasaki Kanagawa 211-8668 (JP)
(74) Representative: MacDougall, Alan John Shaw

(57) **Abstract**

An image processing apparatus that performs filter processing of image data includes a filter processing unit that performs filter processing by reflecting a correction value in a pixel value, an adjustment value generation unit that generates a gain value based on display position of a pixel, and a correction value change unit that changes the correction value based on the gain value generated by the adjustment value generation unit.

## Description

### INCORPORATION BY REFERENCE

This application is based upon and claims the benefit of priority from Japanese patent application No. 2009-106194, filed on April 24, 2009, the disclosure of which is incorporated herein in its entirety by reference.

### BACKGROUND

### 1. Field of the Invention

The present invention relates to an image processing apparatus and an image processing method, and more particularly, to an image processing apparatus and an image processing method to perform filter processing of image data.

### 2. Description of Related Art

In general, in filter processing of image data, each pixel of the image data is multiplied by a predetermined filter coefficient. For example, filter processing is executed with a filter having a predefined size of 3x3 pixels, for example.

However, due to the influence of the pixel of the range in which the filter processing is not executed in a boundary between a range in which the filter processing is executed and a range in which the filter processing is not executed, a symptom may be caused in the image after the filter processing is performed.

Japanese Unexamined Patent Application Publication No. 2006-093966 and Japanese Unexamined Patent Application Publication No. 2006-196937 disclose a technique of copying a pixel corresponding to an end part in the range in which the filter processing is performed as a pixel of a region around the range in which the filter processing is performed, and thereafter performing the filter processing. Accordingly, it is possible to reduce the influence of the pixel around the range in which the filter processing is performed.

However, in the technique disclosed in Japanese Unexamined Patent Application Publication No. 2006-093966 and Japanese Unexamined Patent Application Publication No. 2006-196937, hardware configuration needs to be added to the image processing apparatus to copy the pixel corresponding to the end part in the range in which the filter processing is performed as the pixel in the peripheral region in the range in which the filter processing is performed. Moreover, increase of the number of taps of the filter makes it difficult to control the copy processing.

### SUMMARY

An image processing apparatus according to a first exemplary aspect of the present invention is an apparatus that performs filter processing of image data. The image processing apparatus includes a filter processing unit, an adjustment value generation unit, and a correction value change unit. The filter processing unit performs filter processing by reflecting a correction value in a pixel value. The adjustment value generation unit generates an adjustment value based on positional information of a pixel. The correction value change unit changes the correction value based on the adjustment value generated by the adjustment value generation unit.

According to the first aspect of the present invention, the adjustment value is generated based on the positional information of the pixel, and the correction value is changed based on the adjustment value. In other words, the correction value in the filter processing is changed based on the positional information of the pixel. Hence, the symptom caused by receiving the influence of the pixel of the range in which the filter processing is not performed can be rectified in the boundary between the range in which the filter processing is performed and the range in which the filter processing is not performed. More specifically, for example, by changing the correction value based on the positional information indicating the boundary part between the range in which the filter processing is performed and the range in which the filter processing is not performed, this symptom can be rectified.

Further, unlike the related arts, there is no need to copy the pixel corresponding to the end part in the range in which the filter processing is performed. Therefore, there is no need to add the hardware configuration for the copy processing. Furthermore, since the control of this copy processing is not required, the whole processing can be readily controlled even when the number of taps of the filter is increased.

Hence, it is possible to readily rectify the influence of the range in which the filter processing is performed and the range in which the filter processing is not performed.

An image processing method according to a second aspect of the present invention is a method that performs filter processing of image data. The image processing method includes filter processing, adjustment value generation processing, and correction value change processing. In the filter processing, a correction value is reflected in a pixel value. In the adjustment value generation processing, an adjustment value is generated based on positional information of a pixel. In the correction value change processing, the correction value is changed based on the adjustment value generated in the adjustment value generation processing.

According to the second aspect of the present invention, the adjustment value is generated based on the positional information of the pixel, and the correction value is changed based on the adjustment value. In other words, the correction value in the filter processing is changed based on the positional information of the pixel. Thus, the symptom caused by receiving the influence of the pixel of the range in which the filter processing is not performed can be rectified in the boundary between the range in which the filter processing is performed and the range in which the filter processing is not performed. More specifically, for example, by changing the correction value based on the positional information indicating the boundary part between the range in which the filter processing is performed and the range in which the filter processing is not performed, this symptom can be rectified.

Furthermore, unlike the related arts, there is no need to copy the pixel corresponding to the end part in the range in which the filter processing is performed. Hence, there is no need to add the hardware configuration to realize this copy processing. In addition, since the control of the copy processing is not required even when the number of taps of the filter is increased, the whole processing can be readily controlled.

Hence, it is possible to readily rectify the influence of the range in which the filter processing is performed and the range in which the filter processing is not performed.

According to the present invention, it is possible to readily rectify the symptom caused in the boundary part between the range in which the filter processing is performed and the range in which the filter processing is not performed.

### BRIEF DESCRIPTION OF THE DRAWINGS

The above and other exemplary aspects, advantages and features will be more apparent from the following description of certain exemplary embodiments taken in conjunction with the accompanying drawings, in which:
Fig. 1 is a block diagram showing one example of the configuration of an image processing apparatus according to a first exemplary embodiment of the present invention;
Fig. 2 is a diagram describing gain value information according to the first exemplary embodiment of the present invention;
Fig. 3 is a diagram describing the gain value information according to the first exemplary embodiment of the present invention;
Fig. 4 is a diagram describing the gain value information according to the first exemplary embodiment of the present invention;
Fig. 5 is a diagram describing the gain value information according to the first exemplary embodiment of the present invention;
Fig. 6 is a diagram describing the gain value information according to the first exemplary embodiment of the present invention;
Fig. 7 is a flow chart describing one example of an image processing method according to the first exemplary embodiment of the present invention;
Fig. 8 is a block diagram showing one example of the configuration of an image processing apparatus according to a second exemplary embodiment of the present invention;
Fig. 9 is a diagram describing gain value information according to the second exemplary embodiment of the present invention;
Fig. 10 is a diagram describing the gain value information according to the second exemplary embodiment of the present invention;
Fig. 11 is a flow chart describing one example of an image processing method according to the second exemplary embodiment of the present invention; and
Fig. 12 is a diagram describing the effect of the image processing method according to the second exemplary embodiment of the present invention.

### DETAILED DESCRIPTION OF THE EXEMPLARY EMBODIMENTS

### [First exemplary embodiment]

Hereinafter, the exemplary embodiments of the present invention will be described with reference to the drawings.

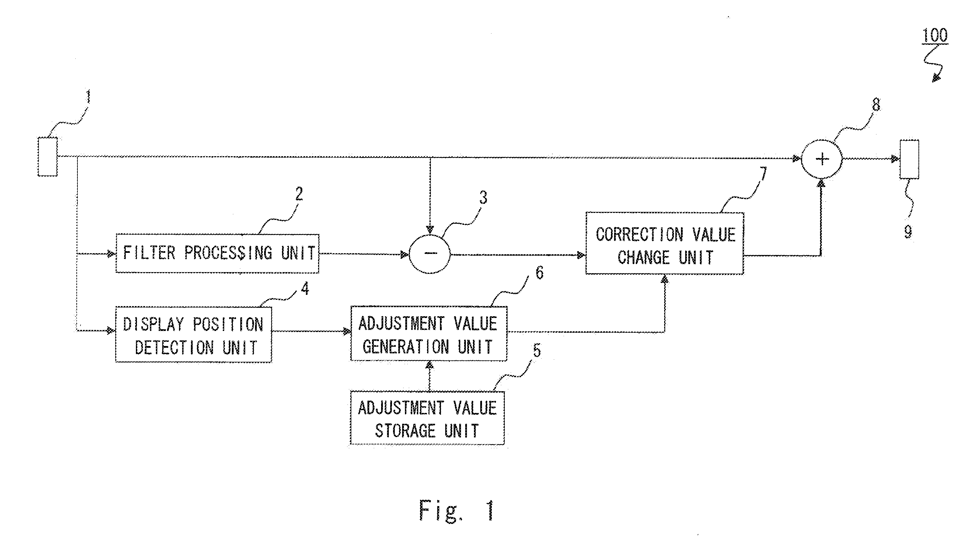

Fig. 1 is a block diagram showing one example of the configuration of an image processing apparatus 100 according to the first exemplary embodiment of the present invention. As shown in Fig. 1, the image processing apparatus 100 includes an input unit 1, a filter processing unit 2, a subtractor 3, a display position detection unit 4, an adjustment value storage unit 5, an adjustment value generation unit 6, a correction value change unit 7, an adder 8, and an output unit 9 and the like.

The image processing apparatus 100 further includes a control unit (not shown) formed by an FPGA (Field Programmable Gate Array) which is not shown, and the FPGA stores various programs for controlling each unit of the image processing apparatus 100. The control unit executes these various programs, so as to control each unit of the image processing apparatus 100. Note that the control unit may include an LSI (Large Scale Integration) instead of the FPGA. If the control unit includes the FPGA, various programs stored in the FPGA can be rewritten.

Alternatively, the image processing apparatus 100 may be realized by causing the program to perform image processing according to the present invention to execute a CPU (Central Processing Unit).

The image data is input to the image processing apparatus 100 through the input unit 1. Specifically, the input unit 1 inputs the image data to the filter processing unit 2, the subtractor 3, the display position detection unit 4, and the adder 8. More specifically, the input unit 1 inputs the pixel value of the pixel included in the image data to the filter processing unit 2, the subtractor 3, and the adder 8. Further, the input unit 1 inputs the coordinate information of the pixel included in the image data to the display position detection unit 4.

The image data which is processed by the image processing apparatus 100 is externally output through the output unit 9. More specifically, the output unit 9 outputs the pixel value of the pixel on which image processing is performed.

The filter processing unit 2 executes filter processing on the image data that is input from the input unit 1. More specifically, the filter processing unit 2 multiplies the pixel value input from the input unit 1 by a correction value. The correction value is, for example, a filter coefficient or the like. The filter processing unit 2 then inputs the pixel value of the pixel on which filter processing is performed to the subtractor 3.

The subtractor 3 calculates the difference (correction amount) between the pixel value of the pixel input from the input unit 1 and the pixel value of the pixel input from the filter processing unit 2 after filter processing is performed. The subtractor 3 then inputs this difference to the correction value change unit 7.

The display position detection unit 4 detects the display position (positional information) of the pixel from the coordinate information of the pixel that is input from the input unit 1. The display position detection unit 4 then inputs the display position of the pixel to the adjustment value generation unit 6.

The adjustment value storage unit 5 stores the adjustment value information in which the display position is associated with a gain value (adjustment value). More specifically, the adjustment value information is the information in which the gain value is expressed as a function of the variable display position.

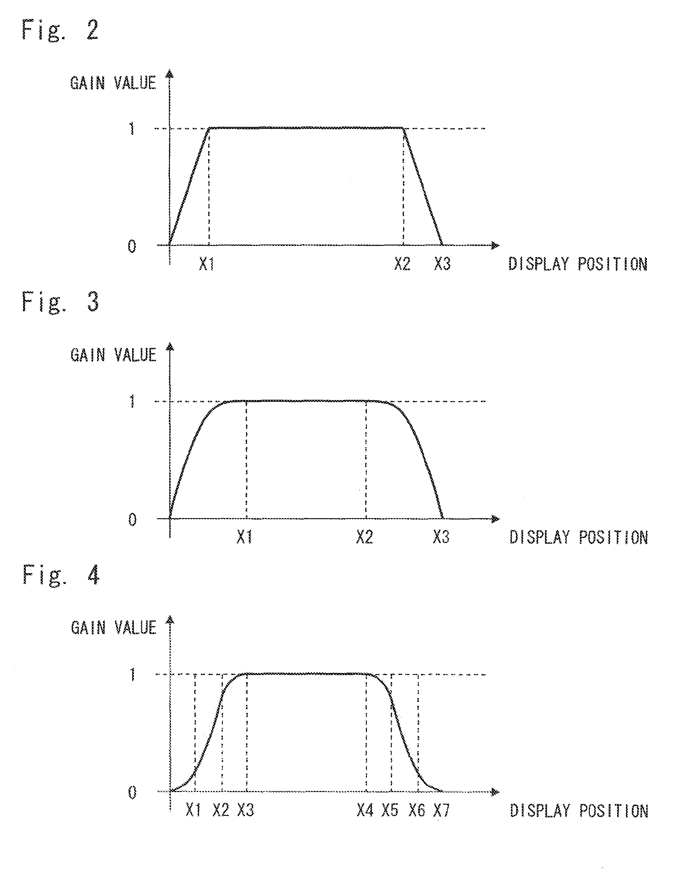

For example, when a vertical axis shows the gain value and a horizontal axis shows the display position, the adjustment value information may be, as shown in Fig. 2, the one in which the gain value is expressed by a function of a trapezoidal shape. More specifically, as shown in Fig. 2, the gain value gradually increases from 0 to 1 in a range from a display position 0 to a first display position X1, the gain value is 1 from the first display position X1 to a second display position X2, and the gain value gradually decreases from I to 0 in a range from the second display position X2 to a third display position X3.

Alternatively, the adjustment value information may be, as shown in Fig. 3, the one in which the gain value is expressed by a function of a curved and straight line when the vertical axis shows the gain value and the horizontal axis shows the display position. More specifically, as shown in Fig. 3, the gain value increases from 0 to 1 so as to become saturated in a range from the display position 0 to a first display position X1, the gain value is 1 in a range from the first display position X1 to a second display position X2, and the gain value is decreased from 1 to 0 at an accelerated rate in a range from the second display position X2 to a third display position X3.

Alternatively, the adjustment value information may be the information in which the gain value is expressed by a function as shown in Fig. 4. More specifically, as shown in Fig. 4, the gain value gradually increases from 0 in a range from a display position 0 to a first display position X1, steeply increases in a range from the first display position X1 to a second display position X2, again gradually increases to reach 1 in a range from the second display position X2 to a third display position X3, keeps 1 in a range from the third display position X3 to a fourth display position X4, gradually decreases in a range from the fourth display position X4 to a fifth display position X5, steeply decreases in a range from the fifth display position X5 to a sixth display position X6, again gradually decreases to reach 0 in a range from the sixth display position X6 to a seventh display position X7.

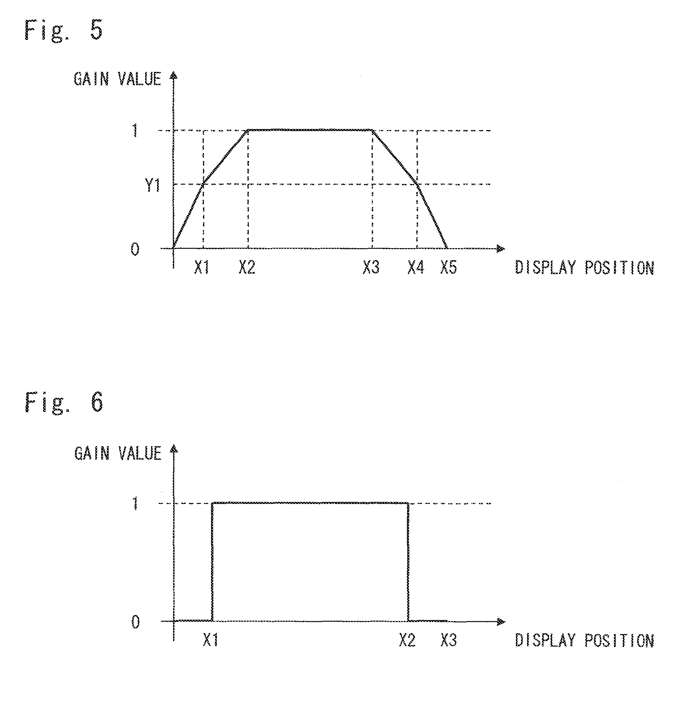

Further alternatively, the adjustment value information may be, as shown in Fig. 5, the one in which the gain value is expressed by a function of a straight line having different gradients when the vertical axis shows the gain value and the horizontal axis shows the display position. More specifically, as shown in Fig. 5, the gain value increases from 0 to Y1 (0<Y1<1) with a first increase ratio in a range from a display position 0 to a first display position X1, increases from Y1 to 1 with a second increase ratio (first increase ratio > second increase ratio) in a range from the first display position X1 to a second display position X2, keeps I in a range from the second display position X2 to a third display position X3, decreases from 1 to Y1 with a first decrease ratio in a range from the third display position X3 to a fourth display position X4, and decreases from Y1 to 0 with a second decrease ratio (first decrease ratio < second decrease ratio) in a range from the fourth display position X4 to a fifth display position X5.

Further alternatively, the adjustment value information may be, as shown in Fig. 6, the information in which the gain value is expressed by a rectangular function as a function of the variable display position. In other words, the adjustment value information may be the information in which the gain value is expressed by a function of a rectangular shape when the vertical axis shows the gain value and the horizontal axis shows the display position. More specifically, as shown in Fig. 6, the gain value is 0 in a range from a display position 0 to a first display position X1, steeply increases from 0 to 1 in the first display position X1, keeps I in a range from the first display position X1 to a second display position X2, steeply decreases from 1 to 0 in the second display position X2, and keeps 0 in a range from the second display position X2 to a third display position X3.

The adjustment value information is not limited to the above-described ones, but may be any information as long as the gain value is expressed as a function of the variable display position.

The adjustment value generation unit 6 refers to the adjustment value information stored in the adjustment value storage unit 5 based on the display position input from the display position detection unit 4, so as to generate the gain value. The adjustment value generation unit 6 then inputs the generated gain value to the correction value change unit 7.

The correction value change unit 7 multiples the difference (correction amount) input from the subtractor 3 by the gain value input from the adjustment value generation unit 6. Thus, the correction value change unit 7 indirectly changes the correction value in the filter processing unit 2. Then, the correction value change unit 7 inputs the value obtained by multiplying the difference by the gain value to the adder 8.

The adder 8 adds the value input from the correction value change unit 7 to the pixel value of the pixel input from the input unit 1. In other words, the adder 8 adds the value obtained by multiplying the difference calculated by the subtractor 3 by the gain value generated by the adjustment value generation unit 6 to the pixel value input from the input unit 1. The adder 8 then externally outputs the value obtained by adding the value input from the correction value change unit 7 to the pixel value input from the input unit 1 through the output unit 9.

In the image processing apparatus 100 according to the first exemplary embodiment, the correction amount (difference) is separated from the pixel value by the subtraction processing performed by the subtractor 3, and the value obtained by multiplying the correction amount by the gain value is added to the pixel value by the addition processing performed by the adder 8. Hence, by changing the gain value, the correction amount in the filter processing unit 2 can be indirectly changed. In other words, by changing the gain value, the influence of the filter processing by the filter processing unit 2 can be changed.

For example, when the gain value is 0, the value added to the pixel value in the adder 8 is 0, which means the influence given on the pixel of the filter processing by the filter processing unit 2 is 0. When the gain value is 1, for example, the value that is added to the pixel value in the adder 8 is equal to the correction amount (difference) itself by the filter processing unit 2, whereby the influence of the filter processing executed by the filter processing unit 2 is completely reflected in the pixel. The gain value is the value that is generated based on the display position of the pixel. Accordingly, in the image processing apparatus 100 of the first exemplary embodiment, it is possible to adjust the influence given on the pixel of the filter processing by the filter processing unit 2 depending on the display position of the pixel.

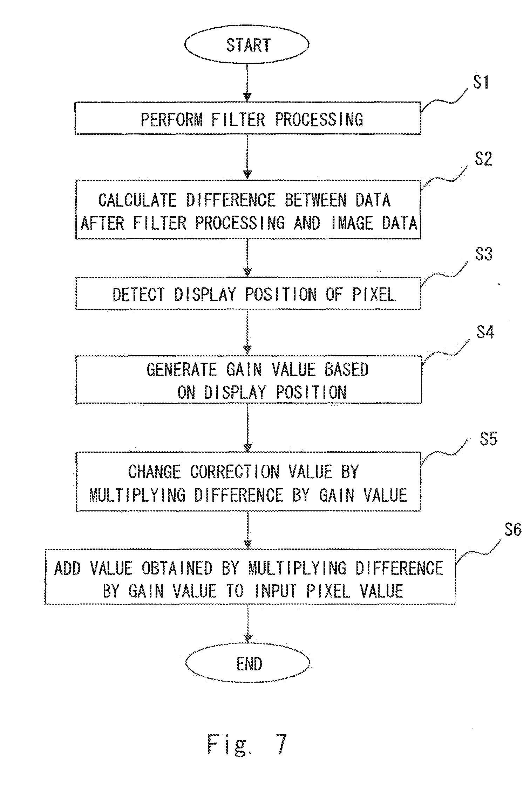

Next, an image processing method in the image processing apparatus 100 according to the first exemplary embodiment of the present invention will be described with reference to a flow chart shown in Fig. 7.

First, the filter processing unit 2 multiplies the pixel value input from the input unit 1 by the correction value (filter coefficient), so as to perform filter processing (step S1).

Next, the subtractor 3 calculates the difference (correction amount) between the pixel value of the pixel input from the input unit 1 and the pixel value of the pixel on which the filter processing is performed input from the filter processing unit 2 (step S2).

Then, the display position detection unit 4 detects the display position of the pixel from the coordinate information of the pixel input from the input unit 1 (step S3).

Next, the adjustment value generation unit 6 refers to the adjustment value information stored in the adjustment value storage unit 5 based on the display position input from the display position detection unit 4, so as to generate the gain value (step S4).

Next, the correction value change unit 7 multiplies the difference (correction amount) input from the subtractor 3 by the gain value input from the adjustment value generation unit 6, so as to indirectly change the correction value in the filter processing unit 2 (step S5).

Next, the adder 8 adds the value obtained by multiplying the difference calculated by the subtractor 3 by the gain value generated by the adjustment value generation unit 6 to the pixel value of the pixel input from the input unit 1 (step S6).

According to the image processing apparatus 100 and the image processing method according to the above-described first exemplary embodiment of the present invention, the gain value is generated based on the display position of the pixel, and the correction value is changed based on the gain value. In other words, the correction value in the filter processing is changed based on the display position of the pixel. Hence, it is possible to rectify the symptom caused by receiving the influence of the pixel of the range in which the filter processing is not performed in the boundary between the range in which the filter processing is performed and the range in which the filter processing is not performed. More specifically, for example, by changing the correction value based on the display position corresponding to the boundary part between the range in which the filter processing is performed and the range in which the filter processing is not performed, the symptom can be rectified.

Furthermore, unlike the related art, there is no need to copy the pixel corresponding to the end part in the range in which the filter processing is performed. Thus, there is no need to add the hardware configuration to realize the copy processing. In addition, since the control of this copy processing is not required, the whole processing can be readily controlled even when the number of taps of the filter is increased.

Further, the image processing apparatus 100 includes the adjustment value storage unit 5 that stores the adjustment value information where the display position is associated with the gain value. Then, the adjustment value generation unit 6 refers to the adjustment value information based on the display position, so as to generate the gain value.

As the adjustment value information is stored in the adjustment value storage unit 5 in advance, the adjustment value generation unit 6 is able to readily generate the gain value.

Furthermore, the adjustment value information is the information in which the gain value is expressed as a function of the variable display position. Hence, the gain value may be changed in a more complicated way based on the display position. In this way, the degree of freedom of change of the correction value in the filter processing can be further increased.

Furthermore, the function that indicates the gain value may be the rectangular function in the adjustment value information.

In this case, the gain value can be changed more steeply depending on the display positions. Accordingly, the influence of the filter processing given on the pixel of the display position corresponding to the part where the gain value is steeply changed can be changed in a steeper way.

### [Second exemplary embodiment]

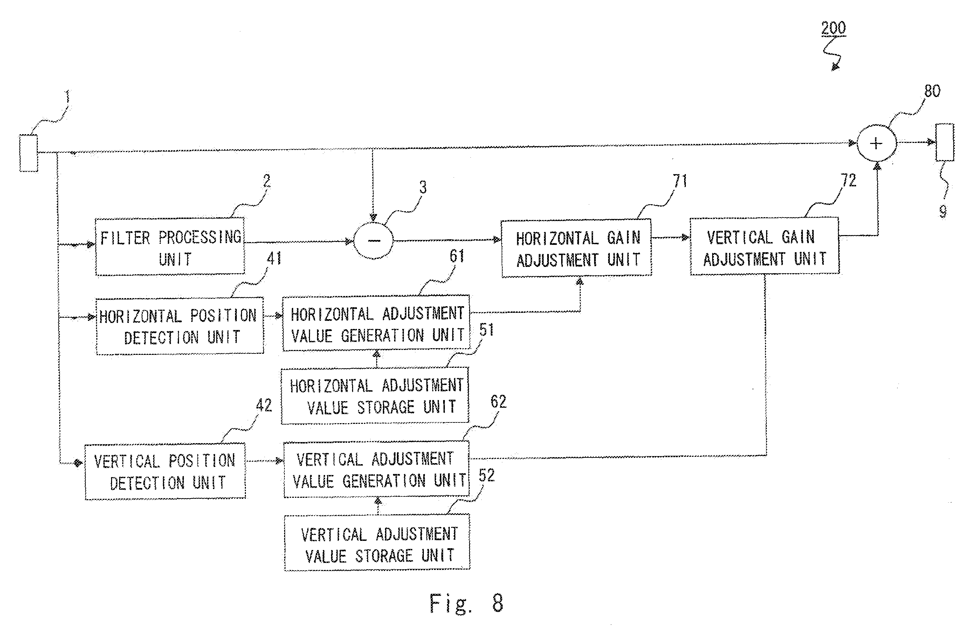

Fig. 8 is a block diagram showing one example of the configuration of an image processing apparatus 200 according to the second exemplary embodiment of the present invention. As shown in Fig. 8, the image processing apparatus 200 according to the second exemplary embodiment has the same configuration as that of the image processing apparatus 100 according to the first exemplary embodiment except for the configurations of a horizontal position detection unit 41, a vertical position detection unit 42, a horizontal adjustment value storage unit 51, a vertical adjustment value storage unit 52, a horizontal adjustment value generation unit 61, a vertical adjustment value generation unit 62, a horizontal gain adjustment unit 71, a vertical gain adjustment unit 72, and an adder 80. The same components are denoted by the same reference symbols, and the overlapping description will be omitted.

The horizontal position detection unit 41 detects the horizontal display position (horizontal position information) where the pixel is displayed from the coordinate information of the pixel input from the input unit 1. The horizontal position detection unit 41 then inputs the horizontal display position of the pixel to the horizontal adjustment value generation unit 61.

The vertical position detection unit 42 detects the vertical display position (vertical position information) where the pixel is displayed from the coordinate information of the pixel input from the input unit 1. Then, the vertical position detection unit 42 then inputs the vertical display position of the pixel to the vertical adjustment value generation unit 62.

The horizontal adjustment value storage unit 51 stores the horizontal adjustment value information in which the horizontal display position is associated with the horizontal gain value (adjustment value). More specifically, the horizontal adjustment value information is the information in which the horizontal gain value is expressed as a function of the variable horizontal display position. More specifically, for example, when the display position is replaced with the horizontal display position in Figs. 2 to 6, the horizontal adjustment value information is the one in which the relation between the horizontal gain value and the horizontal display position is as shown in Figs. 2 to 6.

The vertical adjustment value storage unit 52 stores the vertical adjustment value information in which the vertical display position is associated with the vertical gain value (adjustment value). More specifically, the vertical adjustment value information is the information in which the vertical gain value is expressed as a function of the variable vertical display position. More specifically, for example, when the display position is replaced with the vertical display position in Figs. 2 to 6, the vertical adjustment value information is the one in which the relation between the vertical gain value and the vertical display position is as shown in Figs. 2 to 6.

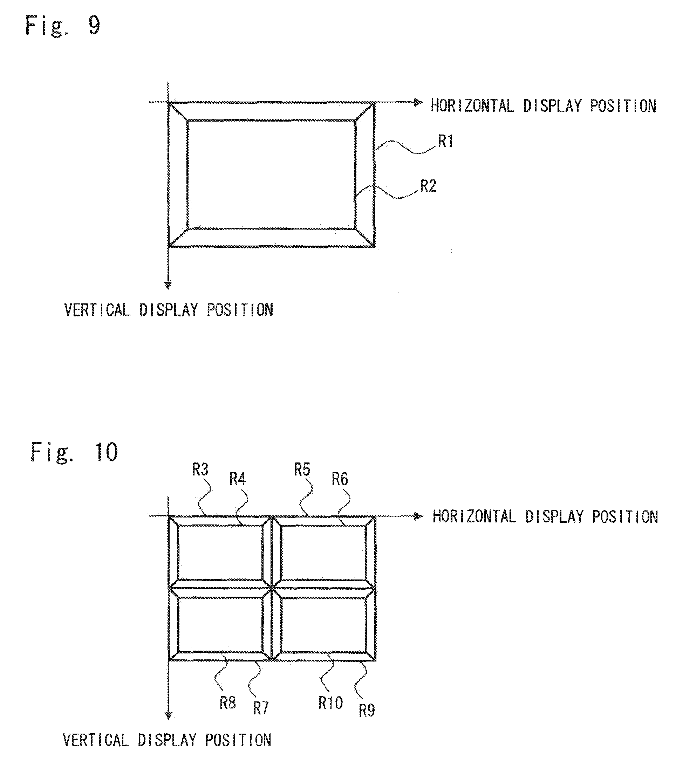

For example, when the horizontal adjustment value information and the vertical adjustment value information are shown in Fig. 2, the horizontal adjustment value information and the vertical adjustment value information are collectively shown as Fig. 9. In Fig. 9, a horizontal axis shows the horizontal display position and a vertical axis shows the vertical display position. Further, in Fig. 9, an axis vertical to a paper surface (not shown) shows the gain value. In summary, in the adjustment value information that includes the horizontal adjustment value information and the vertical adjustment value information, the gain value corresponding to the display position of the range from the boundary neighborhood of an image region R1 having a certain size to the boundary neighborhood of a center region R2 in this image region R1 is gradually changed from the gain value corresponding to the display position indicating the boundary neighborhood of this image region R1 to the gain value corresponding to the display position indicating the boundary neighborhood of this center region R2.

Alternatively, the adjustment value information that includes the horizontal adjustment value information and the vertical adjustment value information may be expressed as shown in Fig. 10. In Fig. 10, the horizontal axis shows the horizontal display position and the vertical axis shows the vertical display position. In Fig. 10, an axis that is vertical to the paper surface (not shown) indicates the gain value. In summary, in Fig. 10, the image is divided into four image regions R3, R5, R7, R9 having a certain size, and there are center regions R4, R6, R8, R10 in the four image regions R3, R5, R7, R9, respectively. The gain value corresponding to the display position of the range from the boundary neighborhood of the image regions R3, R5, R7, R9 to the boundary neighborhood of the center regions R4, R6, R8, R10 is gradually changed from the gain value corresponding to the display position indicating the boundary neighborhood of this image regions R3, R5, R7, R9 to the gain value corresponding to the display position indicating the boundary neighborhood of this center regions R4, R6, R8, R10,

The horizontal adjustment value generation unit 61 refers to the horizontal adjustment value information stored in the horizontal adjustment value storage unit 51 based on the horizontal display position input from the horizontal position detection unit 41, so as to generate the horizontal gain value. The horizontal adjustment value generation unit 61 then inputs the generated horizontal gain value to the horizontal gain adjustment unit 71.

The vertical adjustment value generation unit 62 refers to the vertical adjustment value information stored in the vertical adjustment value storage unit 52 based on the vertical display position input from the vertical position detection unit 42, so as to generate the vertical gain value. The vertical adjustment value generation unit 62 then inputs the generated vertical gain value to the vertical gain adjustment unit 72.

The horizontal gain adjustment unit 71 multiples the difference (correction amount) input from the subtractor 3 by the horizontal gain value input from the horizontal adjustment value generation unit 61. The horizontal gain adjustment unit 71 then inputs the value obtained by multiplying the difference by the horizontal gain value generated by the horizontal adjustment value generation unit 61 to the vertical gain adjustment unit 72.

The vertical gain adjustment unit 72 multiplies the value input from the horizontal gain adjustment unit 71 by the vertical gain value input from the vertical adjustment value generation unit 62. The vertical gain adjustment unit 72 then inputs the value obtained by multiplying the value input from the horizontal gain adjustment unit 71 by the vertical gain value generated by the vertical adjustment value generation unit 62 to the adder 80.

Accordingly, the horizontal gain adjustment unit 71 and the vertical gain adjustment unit 72 indirectly change the correction value in the filter processing unit 2.

The adder 80 adds the value input from the vertical gain adjustment unit 72 to the pixel value of the pixel input from the input unit 1. In other words, the adder 80 adds the value obtained by multiplying the difference calculated by the subtractor 3 by the gain values generated by the horizontal adjustment value generation unit 61 and the vertical adjustment value generation unit 62 to the pixel value input from the input unit 1. The adder 80 then externally outputs the value obtained by adding the value input from the vertical gain adjustment unit 72 to the pixel value input from the input unit 1 through the output unit 9.

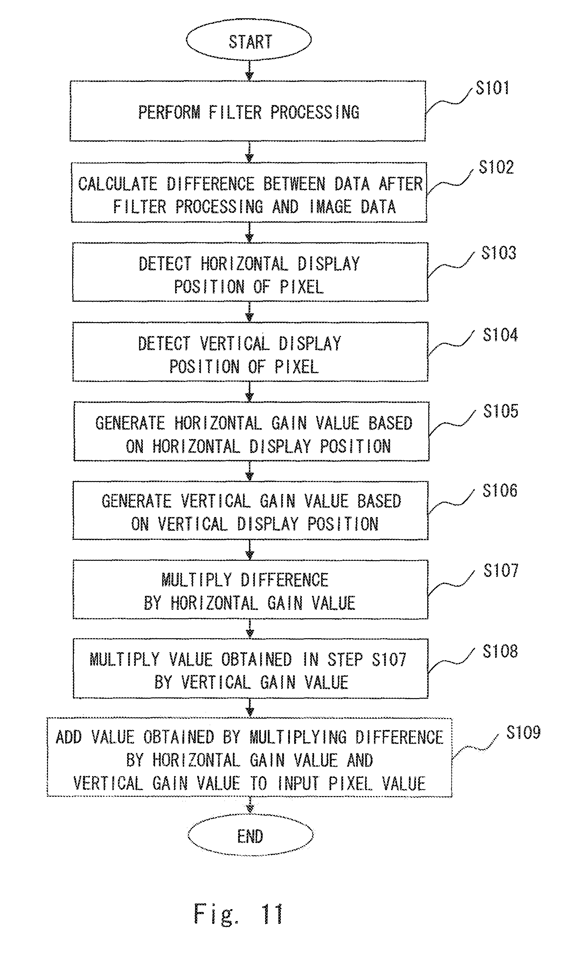

Next, an image processing method in the image processing apparatus 200 according to the second exemplary embodiment of the present invention will be described with reference to a flow chart shown in Fig. 11. The processing of step S101 and step S102 is similar to that of the step S1 and the step S2 shown in Fig. 7, and thus description thereof will be omitted.

Next, the horizontal position detection unit 41 detects the horizontal display position of the pixel from the coordinate information of the pixel input from the input unit 1 (step S103).

Further, the vertical position detection unit 42 detects the vertical display position, of the pixel from the coordinate information of the pixel input from the input unit 1 (step S104).

Next, the horizontal adjustment value generation unit 61 refers to the horizontal adjustment value information stored in the horizontal adjustment value storage unit 51 based on the horizontal display position input from the horizontal position detection unit 41, so as to generate the horizontal gain value (step S105).

Further, the vertical adjustment value generation unit 62 refers to the vertical adjustment value information stored in the vertical adjustment value storage unit 52 based on the vertical display position input from the vertical position detection unit 42, so as to generate the vertical gain value (step S106).

Next, the horizontal gain adjustment unit 71 multiples the difference (correction amount) input from the subtractor 3 by the horizontal gain value input from the horizontal adjustment value generation unit 61 (step S107).

Further, the vertical gain adjustment unit 72 multiples the value obtained by the processing in step S107 by the vertical gain value input from the vertical adjustment value generation unit 62 (step S108).

By the processing in step S107 and step S108, the correction value in the filter processing unit 2 is indirectly changed.

Next, the adder 80 adds the value obtained, by the processing in step S108 to the pixel value of the pixel input from the input unit 1 (step S109).

According to the image processing apparatus 200 and the image processing method according to the above-described second exemplary embodiment of the present invention, the horizontal adjustment value generation unit 61 generates the horizontal gain value based on the horizontal display position of the pixel, and the vertical adjustment value generation unit 62 generates the vertical gain value based on the vertical display position of the pixel. Then, the horizontal gain adjustment unit 71 and the vertical gain adjustment unit 72 change the correction value in the filter processing based on the horizontal gain value and the vertical gain value, respectively.

Accordingly, the gain value can be generated separately in the horizontal direction and the vertical direction. Hence, the correction value can be changed using gain values that are different for the horizontal direction and the vertical direction.

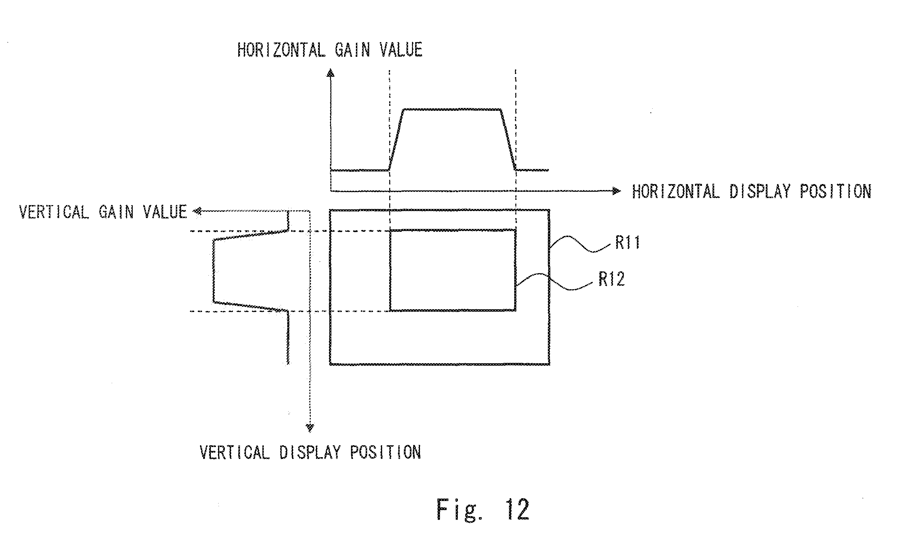

For example, as shown in Fig. 12, when the filter processing is performed only on the region R12 in the image region R11, the influence on the filter processing of the pixels other than the region R12 can be reduced by employing the horizontal adjustment value information and the vertical adjustment value information in which the horizontal gain value and the vertical gain value corresponding to the boundary neighborhood of the region R12 are gradually increased. Hence, by changing the correction value based on the display region corresponding to the boundary part between the range in which the filter processing is performed and the range in which the filter processing is not performed, this symptom can be rectified.

Further, in some cases, the position of the blanking boundary is not stable depending on the state of the original image data or the analog signal. In this case as well, the symptom according to this position deviation can be rectified by using the adjustment value information in which the position deviation of the blanking boundary is taken into consideration in advance.

Further, as shown in Fig. 9, as the adjustment value information that includes the horizontal adjustment value information and the vertical adjustment value information, the information can be used in which the gain value corresponding to the display region of the range from the boundary neighborhood of the image region R1 having a certain size to the boundary neighborhood of the center region R2 in the image region R1 is gradually changed from the gain value corresponding to the display position indicating the boundary neighborhood of the image region R1 to the gain value corresponding to the display position indicating the boundary neighborhood of the center region R2.

Accordingly, the correction value of the range from the boundary neighborhood of the image region R1 having a certain size to the boundary neighborhood of the center region R2 can be changed in a more gradual way. Hence, the influence of the filter processing given to the pixel of this range can be changed in a more gradual way.

Note that the present invention is not limited to the above exemplary embodiments but can be changed as appropriate without departing from the spirit of the present invention.

The first and second exemplary embodiments can be combined as desirable by one of ordinary skill in the art.

While the invention has been described in terms of several exemplary embodiments, those skilled in the art will recognize that the invention can be practiced, with various modifications within the spirit and scope of the appended claims and the invention is not limited to the examples described above.

Further, the scope of the claims is not limited by the exemplary embodiments described above.

Furthermore, it is noted that, Applicant's intent is to encompass equivalents of all claim elements, even if amended later during prosecution.

## Claims

1. An image processing apparatus that performs filter processing of image data, comprising:
a filter processing unit that performs filter processing by reflecting a correction value in a pixel value;
an adjustment value generation unit that generates an adjustment value based on positional information of a pixel; and
a correction value change unit that changes the correction value based on the adjustment value generated by the adjustment value generation unit.

2. The image processing apparatus according to Claim 1, further comprising:
a storage unit that stores adjustment value information in which the positional information is associated with the adjustment value, wherein
the adjustment value generation unit refers to the adjustment value information based on the positional information, so as to generate the adjustment value.

3. The image processing apparatus according to Claim 2, wherein the adjustment value information is the information in which the adjustment value is expressed as a function of the variable positional information.

4. The image processing apparatus according to Claim 2, wherein, in the adjustment value information, the adjustment value corresponding to the positional information of a range from a boundary neighborhood of an image region having a certain size to a boundary neighborhood of a center region in the image region is gradually changed from the adjustment value corresponding to the positional information indicating the boundary neighborhood of the image region to the adjustment value corresponding to the positional information indicating the boundary neighborhood of the center region.

5. The image processing apparatus according to Claim 3, wherein, in the adjustment value information, the adjustment value corresponding to the positional information of a range from a boundary neighborhood of an image region having a certain size to a boundary neighborhood of a center region in the image region is gradually changed from the adjustment value corresponding to the positional information indicating the boundary neighborhood of the image region to the adjustment value corresponding to the positional information indicating the boundary neighborhood of the center region.

6. The image processing apparatus according to Claim 3, wherein, in the adjustment value information, the function is a rectangular function.

7. The image processing apparatus according to any of Claims 1 to 4, wherein the adjustment value generation unit comprises:
a horizontal adjustment value generation unit that generates a horizontal adjustment value based on horizontal position information of the pixel; and
a vertical adjustment value generation unit that generates a vertical adjustment value based on vertical position information of the pixel, wherein
the correction value change unit changes the correction value based on the horizontal adjustment value and the vertical adjustment value.

8. An image processing method that performs filter processing of image data, comprising:
filter processing that reflects a correction value in a pixel value;
adjustment value generation processing that generates an adjustment value based on positional information of a pixel; and
correction value change processing that changes the correction value based on the adjustment value generated in the adjustment value generation processing.

9. The image processing method according to Claim 8, comprising:
storing adjustment value information in which the positional information is associated with the adjustment value by a storage unit, and
referring to the adjustment value information based on the positional information to generate the adjustment value in the adjustment value generation processing.

10. The image processing method according to Claim 9, wherein the adjustment value information is the information in which the adjustment value is expressed as a function of the variable positional information.

11. The image processing method according to Claim 9, wherein, in the adjustment value information, the adjustment value corresponding to the positional information of a range from a boundary neighborhood of an image region having a certain size to a boundary neighborhood of a center region in the image region is gradually changed from the adjustment value corresponding to the positional information indicating the boundary neighborhood of the image region to the adjustment value corresponding to the positional information indicating the boundary neighborhood of the center region.

12. The image processing method according to Claim 10, wherein, in the adjustment value information, the adjustment value corresponding to the positional information of a range from a boundary neighborhood of an image region having a certain size to a boundary neighborhood of a center region in the image region is gradually changed from the adjustment value corresponding to the positional information indicating the boundary neighborhood of the image region to the adjustment value corresponding to the positional information indicating the boundary neighborhood of the center region.

13. The image processing method according to Claim 10, wherein, in the adjustment value information, the function is a rectangular function.

14. The image processing method according to any of Claims 8 to 11, wherein the adjustment value generation processing comprises:
horizontal adjustment value generation processing that generates a horizontal adjustment value based on horizontal position information of the pixel; and
vertical adjustment value generation processing that generates a vertical adjustment value based on vertical position information of the pixel, wherein
the correction value is changed based on the horizontal adjustment value and the vertical adjustment value in the correction value change processing.

15. A computer program product comprising computer implementable instructions for causing a programmable computer device to perform the method of any of Claims 8 to 14.
